# EUROPEAN PATENT SPECIFICATION

(11) **EP 4 148 322 B1**
(45) Date of publication and mention of the grant of the patent: **05.03.2025**
(21) Application number: 22205570.9
(22) Date of filing: 12.11.2019
(51) Int. Cl.: F21S 41/33, F21S 45/47, F21S 41/37, F21S 41/147, F21S 41/148

(54) **VEHICLE LAMP MODULE**
FAHRZEUGLAMPENMODUL
MODULE DE PHARE DE VÉHICULE

(30) Priority: 26.02.2019 CN 201910144380
(43) Date of publication of application: 15.03.2023
(62) Divisional of application: 19917016.8
(73) Proprietor: Hasco Vision Technology Co., Ltd., Jiading District Shanghai 201821 (CN)
(72) Inventor: ZHU, He, Shanghai, 201821 (CN); QIU, Zhiping, Shanghai, 201821 (CN); LI, Cong, Shanghai, 201821 (CN)
(74) Representative: Hertin und Partner Rechts- und Patentanwälte PartG mbB

(56) References cited:
- CN-A- 108 397 743
- CN-A- 108 692 270
- CN-U- 207 112 684
- CN-U- 207 674 347
- CN-U- 207 778 324
- JP-A- 2010 212 110
- JP-A- 2017 212 037
- US-A1- 2016 040 848
- US-A1- 2018 272 921

## Description

### Cross-Reference to Related Applications

The present invention claims priority to Chinese Patent Application No. 2019101443809, filed with the Chinese Patent Office on February 26, 2019, entitled "Vehicle Lamp Module and Vehicle Using Same".

### Technical Field

The present invention relates to the technical field of automobile parts, and in particular to a vehicle lamp module and a vehicle using the same.

### Background Art

In the technical field of vehicle lamps, a vehicle lamp module generally refers to a device having a lens or a component with an equivalent structure as the final light outputting element and configured as a low beam or high beam lighting unit of a vehicle headlight. In recent years, as the automotive industry has been gradually developed well and stably, vehicle lamp modules have found increasing applications. More and more requirements are placed on the overall performance of vehicle lamp modules in the automotive industry. For example, high requirements are imposed on the uniformity of a low-beam or high-beam light pattern from a vehicle headlight, the visibility of the low beam, the heat dissipation performance, the brightness of the high beam, and the structure, weight and size of a module. Vehicle lamp modules are required to have excellent overall performance. However, there is no corresponding technical solution in the prior art to meet the above-mentioned requirements.

In the prior art, a vehicle lamp module with integrated low and high beam LED light sources is disclosed in a patent application, and a vehicle lamp module using LED light sources is also disclosed in a patent application. The technical problems existing in the prior art can be somewhat ameliorated by the technical solutions disclosed in these patents, but further optimization is still required.

JP2017212037A discloses a vehicular headlight, achieving a vehicular headlight in which a dark part region does not occur between a light distribution pattern for low beam for constituting both a low beam light distribution pattern and a high beam light distribution pattern and a light distribution pattern for high beam for constituting only the high beam light distribution pattern.

CN108397743A provides an optical module and an automobile lamp, and relates to the technical field of automobile lamps. According to the optical module and the automobile lamp, the problem that a driver of the automobile running in the opposite direction feels dizzy due to strong light emitted by high beams is solved.

US2016040848A1 provides a vehicle lamp that is configured to be capable of selectively performing low beam illumination and high beam illumination and to be capable of forming a high beam light distribution pattern with a smooth continuity between a low beam light distribution pattern and a high beam supplementary light distribution pattern.

### Summary

An object of the present invention provides a vehicle lamp module according to claim 1 and a vehicle according to claim 11, so as to solve the technical problems of the prior art vehicle headlights which cannot achieve excellent overall performance including the uniformity of a low-beam or high-beam light pattern, the visibility of the low beam, and the brightness of the high beam.

Optionally, there is zero distance between the position of the upper side boundary of the light exiting surface of the high beam condenser and the second focus of the low beam reflector in an optical axis direction of the lens.

Optionally, the first reflecting surface region of the low beam reflector extends to one edge of the low beam reflector at a side away from the second reflecting surface region of the low beam reflector, and the second reflecting surface region of the low beam reflector extends to the other opposite edge of the low beam reflector at a side away from the first reflecting surface region of the low beam reflector.

Optionally, both the surfaces of the first reflecting surface region of the low beam reflector and the second reflecting surface region of the low beam reflector are subjected to aluminizing treatment and aluminized to have a reflectivity greater than or equal to 0.8.

Optionally, the first reflecting surface region of the low beam reflector is polished. The second reflecting surface region of the low beam reflector is not polished.

Optionally, the low beam light source is provided with a light exiting surface, and an angle α less than or equal to 30° is formed between the light exiting surface and a horizontal plane.

Optionally, the low beam light source includes an LED.

Optionally, an optical surface of the high beam condenser includes a light condensing cup structure of the high beam condenser, a totally reflecting surface of the high beam condenser, an upper surface of the high beam condenser, and a light exiting surface of the high beam condenser. The totally reflecting surface of the high beam condenser, the upper surface of the high beam condenser, and the light exiting surface of the high beam condenser are connected in this order. The light condensing cup structure of the high beam condenser is located on a lower side of the totally reflecting surface of the high beam condenser. The totally reflecting surface of the high beam condenser is inclined at an angle relative to the horizontal plane, where 30° ≤ the inclination angle ≤ 60°. The light exiting surface of the high beam condenser is an arcuate surface, and the light exiting surface of the high beam condenser is located in a circle having a diameter ranging from 30 mm to 200 mm (both inclusive). The light condensing cup structure of the high beam condenser includes a reflecting surface of the light condensing cup structure of the high beam condenser, an inner refracting surface of the light condensing cup structure of the high beam condenser, and an inner central surface of the light condensing cup structure of the high beam condenser.

Optionally, a groove is provided in a bottom of the light condensing cup structure of the high beam condenser, the reflecting surface of the light condensing cup structure of the high beam condenser is provided on an outer peripheral wall of the light condensing cup structure of the high beam condenser, the inner refracting surface of the light condensing cup structure of the high beam condenser is provided on a peripheral wall of the groove, and the inner central surface of the light condensing cup structure of the high beam condenser is provided on a bottom wall of the groove.

Optionally, the high beam light source includes an LED, and the number of the high beam light sources is greater than or equal to 2. The number of the light condensing cup structures of the high beam condenser is equal to the number of the high beam light sources, and the light condensing cup structures of the high beam condenser is in one-to-one correspondence to the high beam light sources and are arranged above the corresponding high beam light sources.

Optionally, a reflection enhancing film is provided on the totally reflecting surface of the high beam condenser and/or the upper surface of the high beam condenser.

Optionally, an antireflection film is provided on the light exiting surface of the high beam condenser.

Optionally, the upper surface of the high beam condenser is subjected to aluminizing treatment and is aluminized to have a reflectivity greater than or equal to 0.8.

Optionally, the vehicle lamp module further includes a heat sink, a lens support, and a module support. The lens support is configured such that the lens is mounted thereto, the module support is configured to connect the heat sink and the lens support, and the module support is configured to be connected to a lamp body of the vehicle lamp.

Optionally, an uneven curved surface(s) is provided on one or both sides of a cooling fin(s) of the heat sink.

Optionally, the heat sink is provided with a first mounting surface and a second mounting surface, and an angle not more than 30° is formed between the first mounting surface and the second mounting surface. The low beam circuit board is mounted on the first mounting surface. The high beam circuit board is mounted on the second mounting surface.

Compared with the prior art, the vehicle lamp module according to the present invention can exhibit a uniform low beam, good high-beam lighting performance, and good high beam/low beam switching performance, because a reflector is provided as a primary optical element with a low-beam function, and a condenser is provided as a primary optical element for a high beam. Moreover, the vehicle lamp module consists of a small number of components, has a simple structure, and involves low cost. Due to the structural design of the low beam reflector and the high beam condenser, a small spatial size is occupied by the optical elements of the module as a whole. In summary, the vehicle lamp module according to the present disclosure can exhibit a uniform light pattern and excellent visibility for low beam, due to the proper arrangement of the optical elements and the parametric design of each optical element, and the vehicle lamp module has a relatively simple structure, a lighter weight, a smaller size and lower cost and has good overall performance.

### Brief Description of the Drawings

In order to more clearly illustrate technical solutions of specific embodiments of the present invention or of the prior art, drawings required for use in the description of the specific embodiments or the prior art will be described briefly below. It is obvious that the drawings in the following description are illustrative of some embodiments of the present invention. It will be understood by those of ordinary skill in the art that other drawings can also be obtained from these drawings without any inventive effort.
FIG. 1 is a schematic perspective structural view of a vehicle lamp module according to an embodiment of the present invention;
FIG. 2 is a schematic sectional structural view of a vehicle lamp module according to an embodiment of the present invention;
FIG. 3 is a schematic perspective structural view of an optical component in a vehicle lamp module according to an embodiment of the present invention;
FIG. 4 is a schematic sectional structural view of a low beam reflector according to an embodiment of the present invention;
FIG. 5 is a schematic perspective structural view of a high beam condenser in a vehicle lamp module according to an embodiment of the present invention;
FIG. 6 is a schematic sectional structural view of a high beam condenser in a vehicle lamp module according to an embodiment of the present invention;
FIG. 7 is a schematic structural bottom view of a high beam condenser in a vehicle lamp module according to an embodiment of the present invention;
FIG. 8 is a schematic view showing directions of travel of light from a vehicle lamp module according to an embodiment of the present invention;
FIG. 9 is a schematic view showing a low-beam light pattern from a vehicle lamp module according to an embodiment of the present invention;
FIG. 10 is a schematic view showing a high-beam light pattern from a vehicle lamp module according to an embodiment of the present invention; and
FIG. 11 is a schematic partial structural view of a cooling fin of a heat sink in a vehicle lamp module according to an embodiment of the present invention.

In the figures: 1. low beam circuit board, 2. low beam reflector, 21. inner concave surface, 22. outer convex surface, 3. high beam circuit board, 4. high beam condenser, 5. heat sink, 51. cooling fin, 511. curved surface, 52. first mounting surface, 53. second mounting surface, 54. connecting surface, 6. lens, 7. lens support, 8. module support, 1a. low beam light source, 10. first focus, 11. second focus, 12. light exiting surface, 2a. first reflecting surface region of the low beam reflector, 2b. second reflecting surface region of the low beam reflector, 3a. high beam light source, 4a. light condensing cup structure of the high beam condenser, 41. groove, 4b. totally reflecting surface of the high beam condenser, 4c. upper surface of the high beam condenser, 4d. light exiting surface of the high beam condenser, 401. upper side boundary, 4a-1. reflecting surface of the light condensing cup structure of the high beam condenser, 4a-2. inner refracting surface of the light condensing cup structure of the high beam condenser, 4a-3. inner central surface of the light condensing cup structure of the high beam condenser, R1. emitted low-beam light reflected by the first reflecting surface region of the low beam reflector, R2. first emitted low-beam light reflected by the second reflecting surface region of the low beam reflector, R3. second emitted low-beam light reflected by the second reflecting surface region of the low beam reflector, R4. emitted high-beam light, Lo1. first low-beam light pattern region, Lo2. second low-beam light pattern region, Hi. high-beam light pattern.

### Detailed Description of the Embodiments

The technical solutions of the present invention will be described below clearly and completely with reference to the accompanying drawings in order to further clarify the objects, technical solutions, and advantages of the embodiments of the present invention.

It is apparent that the embodiments to be described are some, but not all of the embodiments of the present invention.

Thus, the following detailed description of the embodiments of the present disclosure, as represented in the figures, is not intended to limit the scope of the present invention as claimed, but is merely representative of selected embodiments of the present invention.

It should be noted that similar reference numerals and letters refer to similar items in the following figures, and thus once an item is defined in one figure, it may not be further defined or explained in the following figures.

In the description of the present invention, it should be noted that the terms such as "center", "up", "down", "left", "right", "vertical", "horizontal", "inside", and "outside" indicate the orientation or positional relationships shown based on the figures, and these terms are intended only to facilitate the description of the present invention and simplify the description, but not intended to indicate or imply that the referred systems or elements must be in a particular orientation or constructed or operated in the particular orientation, and therefore should not be construed as limiting the present invention. In addition, the terms "first", "second", and "third" are used for descriptive purposes only, and should not be understood as an indication or implication of relative importance.

In addition, the term "horizontal", "vertical", "overhanging", or the like, if present, means that a component may be slightly inclined, rather than being required to be absolutely horizontal or overhanging. For example, by the term "horizontal", it is simply meant that its direction is more horizontal than the term "vertical", and it is not meant that the structure must be completely horizontal, but it is meant that the structure may be slightly inclined.

In the description of the present invention, it should be noted that the terms "mount", "couple", and "connect" should be understood broadly unless otherwise expressly specified or defined. For example, connection may be fixed connection or detachable connection or integral connection, may be mechanical connection or electric connection, or may be direct coupling or indirect coupling via an intermediate medium or internal communication between two elements. The specific meanings of the above-mentioned terms in the present invention can be understood by those of ordinary skill in the art according to specific situations.

It should be noted that features in the embodiments of the present invention can be combined with each other without conflict

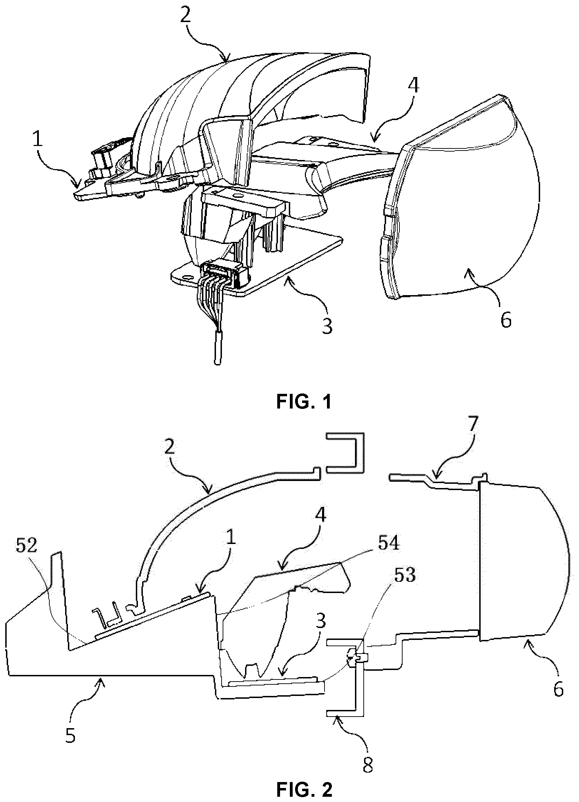

As shown in FIGS. 1 to 11, the present invention provides a vehicle lamp module, comprising: a low beam reflector 2, a high beam condenser 4, a lens 6, a low beam circuit board 1 provided with a low beam light source 1a, and a high beam circuit board 3 provided with a high beam light source 3a. The low beam reflector 2 serves as a primary optical element for a low beam, and the high beam condenser 4 serves as a primary optical element for a high beam. When viewed as shown, for example, in FIG. 1, the low beam circuit board 1 is arranged at a position below the low beam reflector 2, and the optical center of the low beam light source 1a on the low beam circuit board 1 is located at the first focus 10 of the low beam reflector 2. The high beam condenser 4 is arranged at a position in front of the low beam circuit board 1, and a light exiting surface 4d of the high beam condenser is located at the second focus 11 of the low beam reflector 2. There is a distance less than or equal to 2 mm between the position of an upper side boundary 401 of the light exiting surface 4d of the high beam condenser and the second focus 11 of the low beam reflector 2 in a front-to-rear direction. Optionally, there is a distance of 0 mm between the position of the upper side boundary 401 of the light exiting surface 4d of the high beam condenser and the second focus 11 of the low beam reflector 2 in the front-to-rear direction. In other words, their positions coincide with each other. Such structural arrangement allows for increased optical efficiency. The upper side boundary 401 of the light exiting surface 4d of the high beam condenser is shaped like a low beam cut-off line so as to be configured to intercept low-beam light to create a low-beam light pattern. The lens 6 is arranged at a position in front of the high beam condenser 4 and configured to receive light travelling from the light exiting surface 4d of the high beam condenser 4. Light emitted from the low beam light source 1a is reflected by the low beam reflector 2 and then is directed to the lens 6 over the light exiting surface 4d of the high beam condenser and refracted by the lens 6 to form a low-beam light pattern. Light emitted from the high beam light source 3a is refracted and reflected by the high beam condenser 4 and then exits from the light exiting surface 4d of the high beam condenser and is directed to the lens 6 and refracted by the lens 6 to form a high-beam light pattern Hi.

Compared with the prior art, the vehicle lamp module of the present invention has at least the following advantages:

The vehicle lamp module according to the present invention, as shown in FIGS. 1 to 11, includes a low beam reflector 2, a high beam condenser 4, a lens 6, a low beam circuit board 1 provided with a low beam light source 1a, and a high beam circuit board 3 provided with a high beam light source 3a. The low beam reflector 2 serves as a primary optical element for a low beam, and the high beam condenser 4 serves as a primary optical element for a high beam. When viewed as shown, for example, in FIG. 1 or FIG. 2, the low beam circuit board 1 is arranged at a position below the low beam reflector 2, and the optical center of the low beam light source 1a is located at the first focus 10 of the low beam reflector 2. The high beam condenser 4 is arranged at a position in front of the low beam circuit board 1, and a light exiting surface 4d of the high beam condenser is located at the second focus 11 of the low beam reflector 2. There is a distance less than or equal to 2 mm between the position of an upper side boundary 401 of the light exiting surface 4d of the high beam condenser and the second focus 11 of the low beam reflector 2 in a front-to-rear direction. Optionally, there is a distance of 0 mm between the position of the upper side boundary 401 of the light exiting surface 4d of the high beam condenser and the second focus 11 of the low beam reflector 2 in the front-to-rear direction. In other words, the second focus 11 of the low beam reflector 2 is located on the upper side boundary 401 of the light exiting surface 4d of the high beam condenser. Such structural arrangement allows for increased optical efficiency. The upper side boundary 401 of the light exiting surface 4d of the high beam condenser is shaped like a low beam cut-off line so as to be configured to intercept low-beam light to create a low-beam light pattern. The lens 6 is arranged at a position in front of the high beam condenser 4 and configured to receive light travelling from the light exiting surface 4d of the high beam condenser 4. Light emitted from the low beam light source 1a is reflected by the low beam reflector 2 and then is directed to the lens 6 over the light exiting surface 4d of the high beam condenser and refracted by the lens 6 to form a low-beam light pattern. Light emitted from the high beam light source 3a is refracted and reflected by the high beam condenser 4 and then exits from the light exiting surface 4d of the high beam condenser and is directed to the lens 6 and refracted by the lens 6 to form a high-beam light pattern Hi. It can be seen from this analysis that the vehicle lamp module according to the present invention can exhibit a uniform low beam, good high-beam lighting performance, and good high beam/low beam switching performance, because the low beam reflector 2 is provided as a primary optical element with a low-beam function, and the high beam condenser 4 is provided as a primary optical element with a high-beam function. Moreover, the vehicle lamp module consists of a small number of components, has a simple structure, and involves low cost. Due to the structural design of the low beam reflector 2 and the high beam condenser 4, a small spatial size is occupied by the optical elements of the vehicle lamp module as a whole. In summary, the vehicle lamp module according to the present invention can exhibit a uniform light pattern and excellent low-beam visibility due to the proper arrangement of the optical elements and the parametric design of each optical element, and the vehicle lamp module has a relatively simple structure, a lighter weight, a smaller size and lower cost and has good overall performance.

It should be additionally noted here that the front-to-rear direction in the present invention is a direction of emission of light from the vehicle lamp module, i.e., the optical axis direction of the lens 6; and the top-to-bottom direction is the same as the direction of gravity. In addition, a reflector is selected and used as the primary optical element for a low beam because the reflector provides a more uniform light pattern than a condenser, and the reflector designed with a proper optical surface can also provide better low-beam visibility. The primary optical element for a high beam is a condenser, namely, the high beam condenser 4 in the components constituting the vehicle lamp module assembly. The condenser is selected and used as the primary optical element for a high beam because the condenser can provide a high beam with better optical performance than the reflector.

In the present invention, the upper side boundary 401 of the light exiting surface 4d of the high beam condenser is shaped like a low beam cut-off line and configured to intercept low-beam light to create a low-beam light pattern. In the prior art, a low beam cut-off line is generally formed by intercepting light with a structure having a cut-off line shape. In the present invention, the shape of the low beam cut-off line is made on the high beam condenser 4, which is advantageous in that the optical elements are assembled with high accuracy and the vehicle lamp module is obtained with a simple structure and low cost.

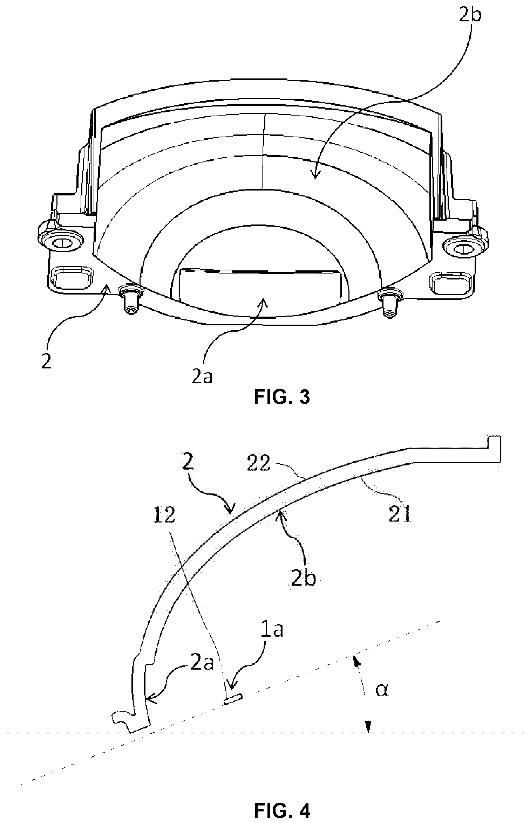

As shown in FIG. 4, optionally, the low beam reflector 2 is substantially in the shape of an arcuate plate and has a regular structure which can be easily machined and manufactured The low beam reflector 2 has an inner concave surface 21 and an outer convex surface 22 opposite to each other, and the inner concave surface 21 faces the lens 6. The inner concave surface 21 of the low beam reflector 2 is provided with a first reflecting surface region 2a of the low beam reflector and a second reflecting surface region 2b of the low beam reflector. When viewed as shown, for example, in FIG. 4, the first reflecting surface region 2a of the low beam reflector is provided at a position on the lower side of the low beam reflector 2. In other words, the inner concave surface 21 includes a first reflecting surface region 2a of the low beam reflector and a second reflecting surface region 2b of the low beam reflector connected to each other. The first reflecting surface region 2a of the low beam reflector extends to one edge of the low beam reflector 2 at a side away from the second reflecting surface region 2b of the low beam reflector, and the second reflecting surface region 2b of the low beam reflector extends to the other opposite edge of the low beam reflector 2 at a side away from the first reflecting surface region 2a of the low beam reflector. Optionally, the first reflecting surface region 2a of the low beam reflector is recessed in a direction toward the outer convex surface 22 from the inner concave surface 21 relative to the second reflecting surface region 2b of the low beam reflector. In other words, the inner concave surface 21 of the low beam reflector 2 is formed as a stepped structure, the first reflecting surface region 2a of the low beam reflector is located on a lower side of the stepped structure, and the second reflecting surface region 2b of the low beam reflector is located on a higher side of the stepped structure. In this way, the first reflecting surface region 2a of the low beam reflector and the second reflecting surface region 2b of the low beam reflector are blocked from each other and are less likely to interfere with each other, which facilitates the travelling of light. Optionally, both the first reflecting surface region 2a of the low beam reflector and the second reflecting surface region 2b of the low beam reflector may be elliptical surfaces, and the area of the first reflecting surface region 2a of the low beam reflector occupies 10% or less of the total area of the low beam reflector 2. Optionally, the area of the first reflecting surface region 2a of the low beam reflector occupies 7% of the total area of the low beam reflector 2, where the total area refers to the surface area of the inner concave surface 21.

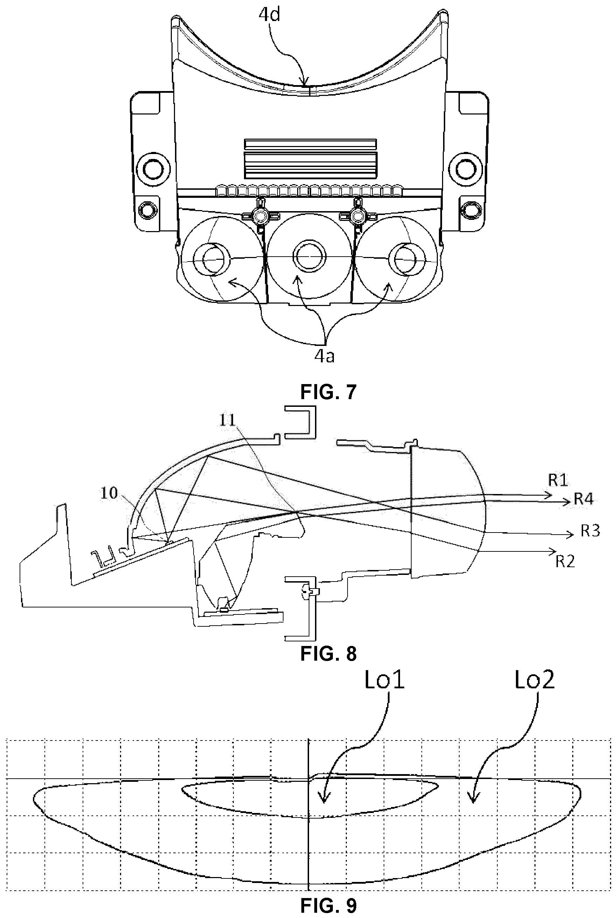

Optionally, both the surfaces of the first reflecting surface region 2a of the low beam reflector and the second reflecting surface region 2b of the low beam reflector are subjected to aluminizing treatment and are aluminized to have a reflectivity greater than or equal to 0.8. Referring to FIG. 8, the first focus 10 of the first reflecting surface region 2a of the low beam reflector is set at the optical center of the low beam light source 1a. The second focus 11 of the first reflecting surface region 2a of the low beam reflector is set on the light exiting surface 4d of the high beam condenser, and there is a distance less than or equal to 2 mm between the position of the upper side boundary 401 of the light exiting surface 4d of the high beam condenser and the second focus 11 of the first reflecting surface region 2a of the low beam reflector in the front-to-rear direction. Optionally, there is a distance of 0 mm between the position of the upper side boundary 401 of the light exiting surface 4d of the high beam condenser and the second focus 11 of the low beam reflector 2 in the front-to-rear direction The second focus 11 of the first reflecting surface region 2a of the low beam reflector is located on the upper side boundary 401 of the light exiting surface 4d of the high beam condenser. This arrangement allows an increase in optical efficiency and also an increase in the light pattern brightness of the low-beam light pattern at 75R and in its vicinity. Referring to FIG. 9, light emitted from the low beam light source 1a is reflected by the first reflecting surface region 2a of the low beam reflector and then is directed to the lens 6 over the light exiting surface 4d of the high beam condenser and refracted by the lens 6 to form a first low-beam light pattern region Lo1. The first low-beam light pattern region Lo1 consists of the regulated test point 75R and its vicinal region below the low beam cut-off line, which can increase the low-beam visibility. The light emitted from the low beam light source 1a is reflected by the second reflecting surface region 2b of the low beam reflector and then is directed to the lens 6 over the light exiting surface 4d of the high beam condenser and refracted by the lens 6 to form a second low-beam light pattern region Lo2. The second low-beam light pattern region Lo2 is a widened or expanded region below the low beam cut-off line. The second low-beam light pattern region Lo2 and the first low-beam light pattern region Lo1 partially overlap each other, which can increase a low-beam irradiation range. In the present invention, optionally, the first low-beam light pattern region Lo1 wholly falls within the second low-beam light pattern region Lo2.

It should be additionally noted here that the first reflecting surface region 2a of the low beam reflector is provided at a position on the lower side of the low beam reflector 2. The first reflecting surface region 2a of the low beam reflector may be an elliptical surface and occupy 10% or less of the total area of the low beam reflector 2. Optionally, the area of the first reflecting surface region 2a of the low beam reflector occupies 7% of the total area of the low beam reflector 2. The reflecting surface of the low beam reflector 2 is designed as above because the reflecting surface region on the lower side of the low beam reflector 2 close to the low beam light source 1a mainly creates a low-beam light pattern at 75R and in its vicinity, while the other reflecting surface regions mainly create a widened low-beam light pattern. As the first reflecting surface region 2a of the low beam reflector is provided close to the low beam light source 1a and has a defined area, the brightness of the low-beam light pattern at 75R and in its vicinity can be increased, whereby the low-beam visibility can be increased.

Optionally, the low beam light source 1a includes an LED, and the bottom surface of the low beam light source 1a forms an angle α relative to the front-to-rear direction. In other words, when viewed, for example, in FIG. 4, the low beam light source 1a includes a bottom surface and a light exiting surface 12 parallel to each other, and there is an angle α between the light exiting surface 12 and the horizontal plane. In the present invention, α ≤ 30°, and optionally, α is 21°. The angle between the low beam reflector 2 and the horizontal plane is equal to the angle α. As the low beam light source 1a and the low beam reflector 2 are inclined upward at a certain angle, more light can be directed into the lens 6 to increase the optical efficiency of the low beam, and chromatic dispersion at the cut-off line of the low beam can also be ameliorated.

Optionally, the first reflecting surface region 2a of the low beam reflector is polished; and the second reflecting surface region 2b of the low beam reflector is not polished. Such design is made because the first reflecting surface region 2a of the low beam reflector is provided to increase the low-beam visibility and the visibility can be further increased by a polishing treatment, while the second reflecting surface region 2b of the low beam reflector is provided to widen a low-beam light pattern, and the uniformity of the widened light pattern can be optimized without a polishing treatment so that a driver can get a good visual experience.

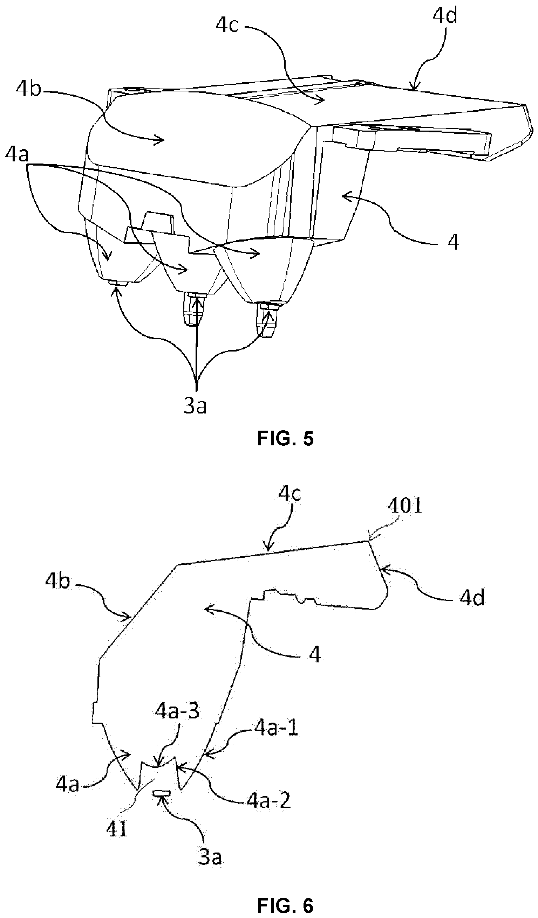

As shown in FIGS. 5 to 8, optionally, an optical surface of the high beam condenser 4 includes a light condensing cup structure 4a of the high beam condenser, a totally reflecting surface 4b of the high beam condenser, an upper surface 4c of the high beam condenser, and a light exiting surface 4d of the high beam condenser. The totally reflecting surface 4b of the high beam condenser, the upper surface 4c of the high beam condenser, and the light exiting surface 4d of the high beam condenser are connected in this order, and the light condensing cup structure 4a of the high beam condenser is located under the totally reflecting surface 4b of the high beam condenser. The light condensing cup structure 4a of the high beam condenser includes a reflecting surface 4a-1 of the light condensing cup structure of the high beam condenser, an inner refracting surface 4a-2 of the light condensing cup structure of the high beam condenser, and an inner central surface 4a-3 of the light condensing cup structure of the high beam condenser. The reflecting surface 4a-1 of the light condensing cup structure of the high beam condenser is provided as an outer peripheral wall of the light condensing cup structure 4a of the high beam condenser. A groove 41 is provided in the bottom of the light condensing cup structure 4a of the high beam condenser. The inner refracting surface 4a-2 of the light condensing cup structure of the high beam condenser is provided as a peripheral wall of the groove 41. The inner central surface 4a-3 of the light condensing cup structure of the high beam condenser is provided as a bottom wall of the groove 41.

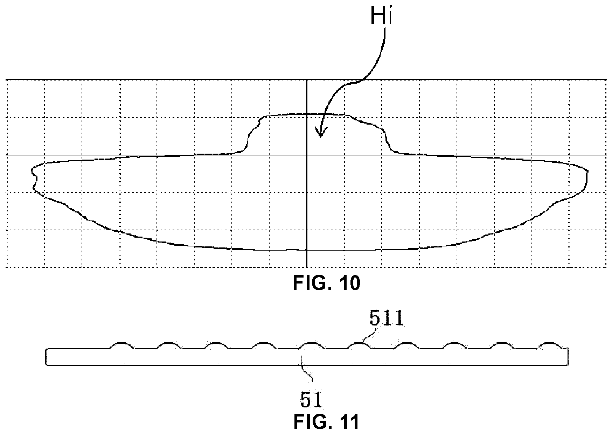

The totally reflecting surface 4b of the high beam condenser is arranged at a position above the light condensing cup structure 4a of the high beam condenser and is inclined relative to the front-to-rear direction. In other words, the totally reflecting surface 4b of the high beam condenser is inclined relative to the horizontal plane, optionally, at an inclination angle between 30° and 60° (both inclusive). Optionally, the totally reflecting surface 4b of the high beam condenser is inclined at an angle of 45° relative to the horizontal plane. It should be understood that the totally reflecting surface 4b of the high beam condenser may be inclined at an angle of 30° or 60° relative to the horizontal plane. Optionally, the totally reflecting surface 4b of the high beam condenser may be inclined relative to the horizontal plane at an inclination angle between 30° and 45° (both inclusive) or between 45° and 60° (both inclusive). The upper surface 4c of the high beam condenser is arranged in the front-to-rear direction, and the two opposite sides of the upper surface 4c of the high beam condenser are connected to the totally reflecting surface 4b of the high beam condenser and the light exiting surface 4d of the high beam condenser, respectively. The light exiting surface 4d of the high beam condenser may be an arcuate surface, and the light exiting surface 4d of the high beam condenser is located in a circle having a diameter ranging from 30 mm to 200 mm (both inclusive). Optionally, the light exiting surface 4d of the high beam condenser is located in a circle having a diameter of 30 mm, 100 mm or 200 mm, or the light exiting surface 4d of the high beam condenser is located in a circle having a diameter between 30 mm and 100 mm (both inclusive), or the light exiting surface 4d of the high beam condenser is located in a circle having a diameter between 100 mm and 200 mm (both inclusive). As shown in FIG. 11, the figure shows a schematic view of a high-beam light pattern. Light emitted from the high beam light source 3a is refracted and reflected by the light condensing cup structure 4a of the high beam condenser and then travels upward in the high beam condenser 4, and then is totally reflected by the totally reflecting surface 4b of the high beam condenser and then continues to travel in the high beam condenser 4 under the upper surface 4c of the high beam condenser, and is refracted from the light exiting surface 4d of the high beam condenser to the lens 6 and refracted by the lens 6 to form a high-beam light pattern Hi.

In the present invention, the high beam condenser 4 is provided with a totally reflecting surface 4b of the high beam condenser, so that the high beam condenser 4 has a substantially "L"-shaped structure. In this way, the size and space of the module in the front-to-rear direction can be reduced, and the low beam light source 1a and the high beam light source 3a are fully separated from each other. The heat dissipation performance is greatly improved by the long distance between the heat sources.

The high beam condenser 4 is in the shape of an "L" shape, so that heat sources for high beam and low beam are spaced apart by a long distance, which greatly improves the heat dissipation performance of the vehicle lamp module.

Optionally, as shown in FIGS. 5 and 7, the high beam light source 3a includes an LED, and the number of the high beam light sources 3a is greater than or equal to 2. Optionally, there are three high beam light sources 3a. The light condensing cup structures 4a of the high beam condenser are provided in the same number as the high beam light sources 3a and are arranged above the corresponding high beam light sources 3a. For example, in the present invention, there are three high beam light sources 3a, and there are three light condensing cup structures 4a in the high beam condenser. The three light condensing cup structures 4a of the high beam condenser are arranged in one-to-one correspondence to the three high beam light sources 3a, and each of the high beam light sources 3a is located at the opening of the groove 41 of the corresponding light condensing cup structure 4a of the high beam condenser.

Optionally, a reflection enhancing film is provided on the totally reflecting surface 4b of the high beam condenser and/or the upper surface 4c of the high beam condenser, thereby effectively increasing the reflectivity of light irradiated onto the surface to further increase the optical efficiency of the vehicle lamp module. An antireflection film is provided on the light exiting surface 4d of the high beam condenser, thereby effectively increasing the transmittance of light through the light exiting surface 4d of the high beam condenser to further increase the optical efficiency of the vehicle lamp module.

Optionally, the upper surface 4c of the high beam condenser is subjected to aluminizing treatment and aluminized to have a reflectivity greater than or equal to 0.8, thereby effectively increasing the reflectivity of the low-beam light irradiated onto the upper surface 4c of the high beam condenser to further increase the optical efficiency of the vehicle lamp module.

Referring to FIG. 2, in the present invention, the vehicle lamp module according to the present invention may further include a heat sink 5, a lens support 7, and a module support 8. An uneven (or concavo-convex) or/and undulating curved surface(s) 511 is provided on one or both sides of a cooling fin(s) 51 of the heat sink 5. The lens support 7 is configured such that the lens 6 is mounted thereto, but another mounting configuration in which the lens 6 is designed on the heat sink 5 or on another component is not excluded. The module support 8 is configured to connect the heat sink 5 and the lens support 7, and the module support 8 may be connected to a lamp body of the vehicle lamp. Due to the structural design of the module support 8, the heat sink 5 and a component assembly thereon can be detached separately from the rear of the lamp body to facilitate replacement of the light sources.

Optionally, the heat sink 5 is provided with a first mounting surface 52 and a second mounting surface 53. The second mounting surface 53 is parallel to the horizontal plane. An angle ranging from 0° to 30° is formed between the first mounting surface 52 and the second mounting surface 53. Optionally, an angle of 30° is formed between the first mounting surface 52 and the second mounting surface 53. Optionally, the first mounting surface 52 and the second mounting surface 53 are connected by a connecting surface 54. The connecting surface 54 is arranged vertically. The first mounting surface 52 and the second mounting surface 53 are not directly connected to each other and have a certain height difference. The low beam circuit board 1 is arranged on the first mounting surface 52, and the high beam circuit board 3 is arranged on the second mounting surface 53, so that there is a height difference between the low beam light source 1a on the low beam circuit board 1 and the high beam light source 3a on the high beam circuit board 3, and the low beam light source 1a and the high beam light source 3a are fully separated from each other. The heat dissipation performance of the vehicle lamp module is greatly improved by the long distance between the heat sources. During mounting, the relative positions of the low beam circuit board 1 and the high beam circuit board 3 are determined. When the mounting is completed, the angle between the low beam light source 1a and the horizontal plane is determined, and its position is accurate, which allows for easy mounting with increased mounting efficiency.

An uneven or/and undulating curved surface(s) 511 is provided on one or both sides of a cooling fin(s) 51 of the heat sink 5, so that the heat dissipation area of the heat sink 5 can be increased without increasing the size of the heat sink 5, thereby further improving the heat dissipation performance of the heat sink 5.

It should be additionally noted here that, in the vehicle lamp module according to the present invention, as shown in FIG. 8, R1 is outgoing low-beam light emitted from the low beam light source 1a and reflected by the first reflecting surface region 2a of the low beam reflector, R2 is first outgoing low-beam light emitted from the low beam light source 1a and reflected by the second reflecting surface region 2b of the low beam reflector, R3 is second outgoing low-beam light emitted from the low beam light source 1a and reflected by the second reflecting surface region 2b of the low beam reflector, and R4 is outgoing high-beam light emitted from the high beam light source 3a.

The present invention further provides a vehicle comprising the vehicle lamp module as mentioned above.

The vehicle lamp module and the vehicle according to the present invention are provided with proper primary optical elements with low-beam and high-beam functions, and the primary optical elements with low-beam and high-beam functions and a related system are designed in an optimized manner, so that the vehicle lamp module has good uniformity, good visibility, good heat dissipation performance, and good high-beam lighting performance. Moreover, the vehicle lamp module has a relatively light weight, small size, and low cost. In other words, the vehicle lamp module has better overall performance.

The above description is merely illustrative of preferred embodiments of the present disclosure and is not intended to limit the present invention.

### Industrial Applicability

In summary, the present invention provides a vehicle lamp module and a vehicle using the same, which has good overall performance.

## Claims

1. A vehicle lamp module, comprising: a low beam reflector (2) and a high beam condenser (4), wherein the low beam reflector (2) serves as a primary optical element for a low beam, and the high beam condenser (4) serves as a primary optical element for a high beam;
further comprising: a low beam circuit board (1) provided with a low beam light source (1a), a high beam circuit board (3) provided with a high beam light source (3a) and a lens (6),
wherein the low beam circuit board (1) is arranged at a position below the low beam reflector (2), and an optical center of the low beam light source (1a) on the low beam circuit board (1) is located at a first focus (10) position of the low beam reflector (2);
the high beam condenser (4) is arranged at a position in front of the low beam circuit board (1), a light exiting surface (12) of the high beam condenser (4) is located at a second focus (11) of the low beam reflector (2), a distance between a position of an upper side boundary (401) of the light exiting surface (12) of the high beam condenser (4) and the second focus (11) of the low beam reflector (2) is less than or equal to 2 mm in a front-to-rear direction, and the upper side boundary (401) of the light exiting surface (12) of the high beam condenser (4) is shaped like a low beam cut-off line, so as to be configured to intercept low-beam light to form a low-beam light pattern;
the lens (6) is arranged at a position in front of the high beam condenser (4), and light emitted from the low beam light source (1a) is reflected by the low beam reflector (2) and then is directed to the lens (6) over the light exiting surface (12) of the high beam condenser (4) and refracted by the lens (6), so as to form a low-beam light pattern; and
light emitted from the high beam light source (3a) is refracted by the high beam condenser (4) and then exits from the light exiting surface (12) of the high beam condenser (4), and is directed to the lens (6) and refracted by the lens (6), so as to form a high-beam light pattern (Hi),
wherein the low beam reflector (2) comprises an inner concave surface (21) and an outer convex surface (22) opposite to each other, wherein the inner concave surface (21) is provided with a first reflecting surface region (2a) of the low beam reflector (2) and a second reflecting surface region (2b) of the low beam reflector (2); a first focus (10) of the first reflecting surface region (2a) of the low beam reflector (2) is set at the optical center of the low beam light source (1a), a second focus (11) of the first reflecting surface region (2a) of the low beam reflector (2) is set on the light exiting surface (12) of the high beam condenser (4), and a distance between the position of the upper side boundary (401) of the light exiting surface (12) of the high beam condenser (4) and the second focus (11) of the first reflecting surface region (2a) of the low beam reflector (2) is less than or equal to 2 mm in the front-to-rear direction;
light emitted from the low beam light source (1a) is reflected by the first reflecting surface region (2a) of the low beam reflector (2) and then is directed to the lens (6) over the light exiting surface (12) of the high beam condenser (4) and refracted by the lens (6), so as to form a first low-beam light pattern region (Lo1);
light emitted from the low beam light source (1a) is reflected by the second reflecting surface region (2b) of the low beam reflector (2) and then is directed to the lens (6) over the light exiting surface (12) of the high beam condenser (4) and refracted by the lens (6), so as to form a second low-beam light pattern region (Lo2);
**characterized in that** the first reflecting surface region (2a) of the low beam reflector (2) is recessed in a direction toward the outer convex surface (22) from the inner concave surface (21) relative to the second reflecting surface region (2b) of the low beam reflector (2); and
the first reflecting surface region (2a) of the low beam reflector (2) is an elliptical surface, and the first reflecting surface region (2a) of the low beam reflector (2) occupies 10% or less of a total area of the low beam reflector (2).

2. The vehicle lamp module according to claim 1, wherein the position of the upper side boundary (401) of the light exiting surface (12) of the high beam condenser (4) and the second focus (11) of the low beam reflector (2) have therebetween a distance of zero in an optical axis direction of the lens (6).

3. The vehicle lamp module according to claim 1, wherein a side of the first reflecting surface region (2a) of the low beam reflector (2) away from the second reflecting surface region (2b) of the low beam reflector (2) extends to one edge of the low beam reflector (2), and a side of the second reflecting surface region (2b) of the low beam reflector (2) away from the first reflecting surface region (2a) of the low beam reflector (2) extends to the other opposite edge of the low beam reflector (2).

4. The vehicle lamp module according to any one of claims 1 to 3, wherein both surfaces of the first reflecting surface region (2a) of the low beam reflector (2) and the second reflecting surface region (2b) of the low beam reflector (2) are subjected to aluminizing treatment, with an aluminizing reflectivity greater than or equal to 0.8.

5. The vehicle lamp module according to any one of claims 1 to 4, wherein the low beam light source (1a) is provided with a light exiting surface (12), and an angle α less than or equal to 30° is formed between the light exiting surface (12) and a horizontal plane,
preferably, the low beam light source (1a) comprises an LED.

6. The vehicle lamp module according to any one of claims 1 to 5, wherein an optical surface of the high beam condenser (4) comprises a light condensing cup structure (4a) of the high beam condenser (4), a totally reflecting surface (4b) of the high beam condenser (4), the upper surface (4c) of the high beam condenser (4), and a light exiting surface (12) of the high beam condenser (4), wherein the totally reflecting surface (4b) of the high beam condenser (4), the upper surface (4c) of the high beam condenser (4) and the light exiting surface (12) of the high beam condenser (4) are connected in sequence; the light condensing cup structure (4a) of the high beam condenser (4) is located on a lower side of the totally reflecting surface (4b) of the high beam condenser (4); the totally reflecting surface (4b) of the high beam condenser (4) is inclined at an angle relative to the horizontal plane, wherein 30° ≤ an inclination angle ≤ 60°; and the light exiting surface (12) of the high beam condenser (4) is an arcuate surface, and the light exiting surface (12) of the high beam condenser (4) is located in a circle having a diameter in a range of 30 mm ≤ the diameter ≤ 200 mm; and
the light condensing cup structure (4a) of the high beam condenser (4) comprises a reflecting surface of the light condensing cup structure (4a) of the high beam condenser (4), an inner refracting surface of the light condensing cup structure (4a) of the high beam condenser (4), and an inner central surface of the light condensing cup structure (4a) of the high beam condenser (4),
preferably, a groove (41) is provided in a bottom of the light condensing cup structure (4a) of the high beam condenser (4), the reflecting surface of the light condensing cup structure (4a) of the high beam condenser (4) is provided on an outer peripheral wall of the light condensing cup structure (4a) of the high beam condenser (4), the inner refracting surface of the light condensing cup structure (4a) of the high beam condenser (4) is provided on a peripheral wall of the groove (41), and the inner central surface of the light condensing cup structure (4a) of the high beam condenser (4) is provided on a bottom wall of the groove (41), preferably, the high beam light source (3a) comprises an LED, and high beam light sources (3a) are provided in a number greater than or equal to 2; and
light condensing cup structures of the high beam condenser (4) are equal in number to the high beam light sources (3a), and the light condensing cup structures of the high beam condenser (4) are in one-to-one correspondence to the high beam light sources (3a) and are arranged above corresponding high beam light sources (3a).

7. The vehicle lamp module according to claim 6, wherein a reflection enhancing film is provided on the totally reflecting surface (4b) of the high beam condenser (4) and/or the upper surface (4c) of the high beam condenser (4).

8. The vehicle lamp module according to any one of claims 6 to 7, wherein an antireflection film is provided on the light exiting surface (12) of the high beam condenser (4).

9. The vehicle lamp module according to any one of claims 6 to 8, wherein the upper surface (4c) of the high beam condenser (4) is subjected to aluminizing treatment, with an aluminizing reflectivity greater than or equal to 0.8.

10. The vehicle lamp module according to any one of claims 1 to 9, further comprising a heat sink (5), a lens support (7), and a module support (8),
wherein the lens support (7) is configured such that the lens (6) is mounted thereto, the module support (8) is configured to connect the heat sink (5) and the lens support (7), and the module support (8) is configured to be connected to a lamp body of the vehicle lamp,
preferably, an uneven curved surface (511) or uneven curved surfaces (511) is/are provided on one or both sides of a cooling fin (51) of the heat sink (5),
preferably, the heat sink (5) is provided with a first mounting surface (52) and a second mounting surface (53), wherein an angle not more than 30° is formed between the first mounting surface (52) and the second mounting surface (53); the low beam circuit board (1) is mounted on the first mounting surface (52); and the high beam circuit board (3) is mounted on the second mounting surface (53).

11. A vehicle, **characterized by** comprising the vehicle lamp module according to any one of claims 1 to 10.

## Patentansprüche

1. Fahrzeuglampenmodul, umfassend: einen Abblendlichtreflektor (2) und einen Fernlichtkondensor (4), wobei der Abblendlichtreflektor (2) als ein primäres optisches Element für ein Abblendlicht dient und der Fernlichtkondensor (4) als ein primäres optisches Element für ein Fernlicht dient;
ferner umfassend: eine Abblendlicht-Leiterplatte (1), die mit einer Abblendlicht-Lichtquelle (1a) versehen ist, eine Fernlicht-Leiterplatte (3), die mit einer Fernlicht-Lichtquelle (3a) versehen ist, und eine Linse (6),
wobei die Abblendlicht-Leiterplatte (1) an einer Position unter dem Abblendlichtreflektor (2) angeordnet ist und sich ein optisches Zentrum der Abblendlicht-Lichtquelle (1a) auf der Abblendlicht-Leiterplatte (1) an einer Position eines ersten Fokus (10) des Abblendlichtreflektors (2) befindet;
der Fernlichtkondensor (4) an einer Position vor der Abblendlicht-Leiterplatte (1) angeordnet ist, sich eine Lichtaustrittsfläche (12) des Fernlichtkondensors (4) an einem zweiten Fokus (11) des Abblendlichtreflektors (2) befindet, ein Abstand zwischen einer Position einer oberen Seitenbegrenzung (401) der Lichtaustrittsfläche (12) des Fernlichtkondensors (4) und dem zweiten Fokus (11) des Abblendlichtreflektors (2) kleiner oder gleich 2 mm in eine Richtung von vorne nach hinten ist und die obere Seitenbegrenzung (401) der Lichtaustrittsfläche (12) des Fernlichtkondensors (4) wie eine Abblendlicht-Hell-Dunkel-Grenze geformt ist, um derart konfiguriert zu sein, Abblendlicht abzufangen, um ein Abblendlicht-Lichtmuster zu bilden;
die Linse (6) an einer Position vor dem Fernlichtkondensor (4) angeordnet ist und Licht, das von der Abblendlicht-Lichtquelle (1a) emittiert wird, durch den Abblendlichtreflektor (2) reflektiert und dann zu der Linse (6) über die Lichtaustrittsfläche (12) des Fernlichtkondensors (4) geleitet und durch die Linse (6) gebrochen wird, um ein Abblendlicht-Lichtmuster zu bilden; und
Licht, das von der Fernlicht-Lichtquelle (3a) emittiert wird, durch den Fernlichtkondensor (4) gebrochen wird und dann aus der Lichtaustrittsfläche (12) des Fernlichtkondensors (4) austritt und zu der Linse (6) geleitet und durch die Linse (6) gebrochen wird, um ein Fernlicht-Lichtmuster (Hi) zu bilden,
wobei der Abblendlichtreflektor (2) eine innere konkave Oberfläche (21) und eine äußere konvexe Oberfläche (22), die einander gegenüberliegen, umfasst, wobei die innere konkave Oberfläche (21) mit einem ersten reflektierenden Oberflächenbereich (2a) des Abblendlichtreflektors (2) und einem zweiten reflektierenden Oberflächenbereich (2b) des Abblendlichtreflektors (2) versehen ist; ein erster Fokus (10) des ersten reflektierenden Oberflächenbereichs (2a) des Abblendlichtreflektors (2) auf das optische Zentrum der Abblendlicht-Lichtquelle (1a) eingestellt ist, ein zweiter Fokus (11) des ersten reflektierenden Oberflächenbereichs (2a) des Abblendlichtreflektors (2) auf die Lichtaustrittsfläche (12) des Fernlichtkondensors (4) eingestellt ist und ein Abstand zwischen der Position der oberen Seitenbegrenzung (401) der Lichtaustrittsfläche (12) des Fernlichtkondensors (4) und dem zweiten Fokus (11) des ersten reflektierenden Oberflächenbereichs (2a) des Abblendlichtreflektors (2) kleiner oder gleich 2 mm in die Richtung von vorne nach hinten ist;
Licht, das von der Abblendlicht-Lichtquelle (1a) emittiert wird, durch den ersten reflektierenden Oberflächenbereich (2a) des Abblendlichtreflektors (2) reflektiert und dann zu der Linse (6) über die Lichtaustrittsfläche (12) des Fernlichtkondensors (4) geleitet und durch die Linse (6) gebrochen wird, um einen ersten Abblendlicht-Lichtmusterbereich (Lo1) zu bilden;
Licht, das von der Abblendlicht-Lichtquelle (1a) emittiert wird, durch den zweiten reflektierenden Oberflächenbereich (2b) des Abblendlichtreflektors (2) reflektiert und dann zu der Linse (6) über die Lichtaustrittsfläche (12) des Fernlichtkondensors (4) geleitet und durch die Linse (6) gebrochen wird, um einen zweiten Abblendlicht-Lichtmusterbereich (Lo2) zu bilden;
**dadurch gekennzeichnet, dass** der erste reflektierende Oberflächenbereich (2a) des Abblendlichtreflektors (2) in eine Richtung zu der äußeren konvexen Oberfläche (22) hin von der inneren konkaven Oberfläche (21) relativ zu dem zweiten reflektierenden Oberflächenbereich (2b) des Abblendlichtreflektors (2) zurückgesetzt ist; und
der erste reflektierende Oberflächenbereich (2a) des Abblendlichtreflektors (2) eine elliptische Oberfläche ist, und der erste reflektierende Oberflächenbereich (2a) des Abblendlichtreflektors (2) 10 % oder weniger einer Gesamtfläche des Abblendlichtreflektors (2) einnimmt.

2. Fahrzeuglampenmodul nach Anspruch 1, wobei die Position der oberen Seitenbegrenzung (401) der Lichtaustrittsfläche (12) des Fernlichtkondensors (4) und der zweite Fokus (11) des Abblendlichtreflektors (2) dazwischen einen Abstand von null in eine Richtung der optischen Achse der Linse (6) aufweisen.

3. Fahrzeuglampenmodul nach Anspruch 1, wobei sich eine Seite des ersten reflektierenden Oberflächenbereichs (2a) des Abblendlichtreflektors (2) weg vom zweiten reflektierenden Oberflächenbereich (2b) des Abblendlichtreflektors (2) zu einem Rand des Abblendlichtreflektors (2) erstreckt und sich eine Seite des zweiten reflektierenden Oberflächenbereichs (2b) des Abblendlichtreflektors (2) weg vom ersten reflektierenden Oberflächenbereich (2a) des Abblendlichtreflektors (2) zu dem anderen gegenüberliegenden Rand des Abblendlichtreflektors (2) erstreckt.

4. Fahrzeuglampenmodul nach einem der Ansprüche 1 bis 3, wobei beide Oberflächen des ersten reflektierenden Oberflächenbereichs (2a) des Abblendlichtreflektors (2) und des zweiten reflektierenden Oberflächenbereichs (2b) des Abblendlichtreflektors (2) einer Aluminierungsbehandlung mit einer Aluminierungsreflektivität von größer oder gleich 0,8 unterzogen werden.

5. Fahrzeuglampenmodul nach einem der Ansprüche 1 bis 4, wobei die Abblendlicht-Lichtquelle (1a) mit einer Lichtaustrittsfläche (12) versehen ist und ein Winkel α kleiner oder gleich 30° zwischen der Lichtaustrittsfläche (12) und einer Horizontalebene ausgebildet ist,
vorzugsweise wobei die Abblendlicht-Lichtquelle (1a) eine LED umfasst.

6. Fahrzeuglampenmodul nach einem der Ansprüche 1 bis 5, wobei eine optische Oberfläche des Fernlichtkondensors (4) eine lichtbündelnde Becherstruktur (4a) des Fernlichtkondensors (4), eine totalreflektierende Oberfläche (4b) des Fernlichtkondensors (4), die obere Oberfläche (4c) des Fernlichtkondensors (4) und eine Lichtaustrittsfläche (12) des Fernlichtkondensors (4) umfasst, wobei die totalreflektierende Oberfläche (4b) des Fernlichtkondensors (4), die obere Oberfläche (4c) des Fernlichtkondensors (4) und die Lichtaustrittsfläche (12) des Fernlichtkondensors (4) in Reihe verbunden sind; sich die lichtbündelnde Becherstruktur (4a) des Fernlichtkondensors (4) auf einer unteren Seite der totalreflektierenden Oberfläche (4b) des Fernlichtkondensors (4) befindet; die totalreflektierende Oberfläche (4b) des Fernlichtkondensors (4) mit einem Winkel relativ zu der Horizontalebene geneigt ist, wobei 30° ≤ ein Neigungswinkel ≤ 60°; und die Lichtaustrittsfläche (12) des Fernlichtkondensors (4) eine bogenförmige Oberfläche ist, und sich die Lichtaustrittsfläche (12) des Fernlichtkondensors (4) in einem Kreis befindet, der einen Durchmesser in einem Bereich von 30 mm ≤ der Durchmesser ≤ 200 mm aufweist; und
die lichtbündelnde Becherstruktur (4a) des Fernlichtkondensors (4) eine reflektierende Oberfläche der lichtbündelnden Becherstruktur (4a) des Fernlichtkondensors (4), eine innere brechende Oberfläche der lichtbündelnden Becherstruktur (4a) des Fernlichtkondensors (4) und eine innere zentrale Oberfläche der lichtbündelnden Becherstruktur (4a) des Fernlichtkondensors (4) umfasst,
vorzugsweise eine Rille (41) in einer Unterseite der lichtbündelnden Becherstruktur (4a) des Fernlichtkondensors (4) bereitgestellt ist, die reflektierende Oberfläche der lichtbündelnden Becherstruktur (4a) des Fernlichtkondensors (4) an einer äußeren Peripheriewand der lichtbündelnden Becherstruktur (4a) des Fernlichtkondensors (4) bereitgestellt ist, die innere brechende Oberfläche der lichtbündelnden Becherstruktur (4a) des Fernlichtkondensors (4) an einer Peripheriewand der Rille (41) bereitgestellt ist und die innere zentrale Oberfläche der lichtbündelnden Becherstruktur (4a) des Fernlichtkondensors (4) an einer unteren Wand der Rille (41) bereitgestellt ist,
vorzugsweise die Fernlicht-Lichtquelle (3a) eine LED umfasst, und die Fernlicht-Lichtquellen (3a) in einer Anzahl größer oder gleich 2 bereitgestellt sind; und
lichtbündelnde Becherstrukturen des Fernlichtkondensors (4) eine gleiche Anzahl aufweisen wie die Fernlicht-Lichtquellen (3a), und die lichtbündelnden Becherstrukturen des Fernlichtkondensors (4) in einer Eins-zu-Eins-Korrespondenz zu den Fernlicht-Lichtquellen (3a) vorliegen und über entsprechenden Fernlicht-Lichtquellen (3a) angeordnet sind.

7. Fahrzeuglampenmodul nach Anspruch 6, wobei ein reflexionsverstärkender Film auf der totalreflektierenden Oberfläche (4b) des Fernlichtkondensors (4) und/oder der oberen Oberfläche (4c) des Fernlichtkondensors (4) bereitgestellt ist.

8. Fahrzeuglampenmodul nach einem der Ansprüche 6 bis 7, wobei ein Antireflexionsfilm auf der Lichtaustrittsfläche (12) des Fernlichtkondensors (4) bereitgestellt ist.

9. Fahrzeuglampenmodul nach einem der Ansprüche 6 bis 8, wobei die obere Oberfläche (4c) des Fernlichtkondensors (4) einer Aluminierungsbehandlung mit einer Aluminierungsreflektivität größer oder gleich 0,8 unterzogen wird.

10. Fahrzeuglampenmodul nach einem der Ansprüche 1 bis 9, ferner umfassend einen Kühlkörper (5), eine Linsenhalterung (7) und eine Modulhalterung (8),
wobei die Linsenhalterung (7) so konfiguriert ist, dass die Linse (6) daran befestigt ist, die Modulhalterung (8) konfiguriert ist, den Kühlkörper (5) und die Linsenhalterung (7) zu verbinden, und die Modulhalterung (8) konfiguriert ist, mit einem Lampenkörper der Fahrzeuglampe verbunden zu sein,
vorzugsweise eine unebene gekrümmte Oberfläche (511) oder unebene gekrümmte Oberflächen (511) auf einer oder beiden Seiten einer Kühlrippe (51) des Kühlkörpers (5) bereitgestellt ist bzw. sind,
vorzugsweise der Kühlkörper (5) mit einer ersten Befestigungsfläche (52) und einer zweiten Befestigungsfläche (53) versehen ist, wobei ein Winkel von nicht mehr als 30° zwischen der ersten Befestigungsfläche (52) und der zweiten Befestigungsfläche (53) ausgebildet ist; die Abblendlicht-Leiterplatte (1) an der ersten Befestigungsfläche (52) befestigt ist; und die Fernlicht-Leiterplatte (3) an der zweiten Befestigungsfläche (53) befestigt ist.

11. Fahrzeug, **dadurch gekennzeichnet, dass** es das Fahrzeuglampenmodul nach einem der Ansprüche 1 bis 10 umfasst.

## Revendications

1. Module de phare de véhicule, comprenant : un réflecteur de feu de croisement (2) et un condenseur de feu de route (4), dans lequel le réflecteur de feu de croisement (2) sert d'élément optique primaire pour un feu de croisement, et le condenseur de feu de route (4) sert d'élément optique primaire pour un feu de route ;
comprenant en outre : une carte de circuit imprimé de feu de croisement (1) pourvue d'une source lumineuse de feu de croisement (1a), une carte de circuit imprimé de feu de route (3) pourvue d'une source lumineuse de feu de route (3a) et d'une lentille (6),
dans lequel la carte de circuit imprimé de feu de croisement (1) est agencée au niveau d'une position en dessous du réflecteur de feu de croisement (2), et un centre optique de la source lumineuse de feu de croisement (1a) sur la carte de circuit imprimé de feu de croisement (1) est situé au niveau d'une position de premier foyer (10) du réflecteur de feu de croisement (2) ;
le condenseur de feu de route (4) est agencé au niveau d'une position à l'avant de la carte de circuit imprimé de feu de croisement (1), une surface de sortie de lumière (12) du condenseur de feu de route (4) est située au niveau d'un second foyer (11) du réflecteur de feu de croisement (2), une distance entre une position d'une limite latérale supérieure (401) de la surface de sortie de lumière (12) du condenseur de feu de route (4) et le second foyer (11) du réflecteur de feu de croisement (2) est inférieure ou égale à 2 mm dans une direction d'avant en arrière, et la limite latérale supérieure (401) de la surface de sortie de lumière (12) du condenseur de feu de route (4) a une forme telle que celle d'une ligne de coupure de feu de croisement, de sorte à être configuré pour intercepter la lumière de feu de croisement pour former un motif lumineux de feu de croisement ;
la lentille (6) est agencée au niveau d'une position à l'avant du condenseur de feu de route (4), et la lumière émise à partir de la source lumineuse de feu de croisement (1a) est réfléchie par le réflecteur de feu de croisement (2) et est ensuite dirigée vers la lentille (6) au-dessus de la surface de sortie de lumière (12) du condenseur de feu de route (4) et réfractée par la lentille (6), de sorte à former un motif lumineux de feu de croisement ; et
la lumière émise à partir de la source lumineuse de feu de route (3a) est réfractée par le condenseur de feu de route (4) et puis sort de la surface de sortie de lumière (12) du condenseur de feu de route (4), et est dirigée vers la lentille (6) et réfractée par la lentille (6), de sorte à former un motif lumineux de feu de route (Hi),
dans lequel le réflecteur de feu de croisement (2) comprend une surface concave interne (21) et une surface convexe externe (22) en regard l'une de l'autre, dans lequel la surface concave interne (21) est pourvue d'une première région de surface réfléchissante (2a) du réflecteur de feu de croisement (2) et d'une seconde région de surface réfléchissante (2b) du réflecteur de feu de croisement (2) ; un premier foyer (10) de la première région de surface réfléchissante (2a) du réflecteur de feu de croisement (2) est défini au niveau du centre optique de la source lumineuse de feu de croisement (1a), un second foyer (11) de la première région de surface réfléchissante (2a) du réflecteur de feu de croisement (2) est défini sur la surface de sortie de lumière (12) du condenseur de feu de route (4), et une distance entre la position de la limite latérale supérieure (401) de la surface de sortie de lumière (12) du condenseur de feu de route (4) et le second foyer (11) de la première région de surface réfléchissante (2a) du réflecteur de feu de croisement (2) est inférieure ou égale à 2 mm dans la direction d'avant en arrière ;
la lumière émise à partir de la source lumineuse de feu de croisement (1a) est réfléchie par la première région de surface réfléchissante (2a) du réflecteur de feu de croisement (2) et est ensuite dirigée vers la lentille (6) au-dessus de la surface de sortie de lumière (12) du condenseur de feu de route (4) et réfractée par la lentille (6), de sorte à former une première région de motif lumineux de feu de croisement (Lo1) ;
la lumière émise à partir de la source lumineuse de feu de croisement (1a) est réfléchie par la seconde région de surface réfléchissante (2b) du réflecteur de feu de croisement (2) et est ensuite dirigée vers la lentille (6) au-dessus de la surface de sortie de lumière (12) du condenseur de feu de route (4) et réfractée par la lentille (6), de sorte à former une seconde région de motif lumineux de feu de croisement (Lo2) ;
**caractérisé en ce que** la première région de surface réfléchissante (2a) du réflecteur de feu de croisement (2) est montée en retrait dans une direction vers la surface convexe externe (22) à partir de la surface concave interne (21) par rapport à la seconde région de surface réfléchissante (2b) du réflecteur de feu de croisement (2) ; et
la première région de surface réfléchissante (2a) du réflecteur de feu de croisement (2) est une surface elliptique, et la première région de surface réfléchissante (2a) du réflecteur de feu de croisement (2) occupe 10 % ou moins d'une surface totale du réflecteur de feu de croisement (2).

2. Module de phare de véhicule selon la revendication 1, dans lequel une distance entre la position de la limite latérale supérieure (401) de la surface de sortie de lumière (12) du condenseur de feu de route (4) et le second foyer (11) du réflecteur de feu de croisement (2) est nulle dans une direction d'axe optique de la lentille (6).

3. Module de phare de véhicule selon la revendication 1, dans lequel un côté de la première région de surface réfléchissante (2a) du réflecteur de feu de croisement (2) à distance de la seconde région de surface réfléchissante (2b) du réflecteur de feu de croisement (2) s'étend jusqu'à un bord du réflecteur de feu de croisement (2), et un côté de la seconde région de surface réfléchissante (2b) du réflecteur de feu de croisement (2) à distance de la première région de surface réfléchissante (2a) du réflecteur de feu de croisement (2) s'étend jusqu'à l'autre bord opposé du réflecteur de feu de croisement (2).

4. Module de phare de véhicule selon l'une quelconque des revendications 1 à 3, dans lequel les deux surfaces de la première région de surface réfléchissante (2a) du réflecteur de feu de croisement (2) et de la seconde région de surface réfléchissante (2b) du réflecteur de feu de croisement (2) sont soumises à un traitement d'aluminisation, avec une réflectivité d'aluminisation supérieure ou égale à 0,8.

5. Module de phare de véhicule selon l'une quelconque des revendications 1 à 4, dans lequel la source lumineuse de feu de croisement (1a) est pourvue d'une surface de sortie de lumière (12), et un angle α inférieur ou égal à 30° est formé entre la surface de sortie de lumière (12) et un plan horizontal, de préférence, la source lumineuse de feu de croisement (1a) comprend une DEL.

6. Module de phare de véhicule selon l'une quelconque des revendications 1 à 5, dans lequel une surface optique du condenseur de feu de route (4) comprend une structure de coupelle de condensation de lumière (4a) du condenseur de feu de route (4), une surface totalement réfléchissante (4b) du condenseur de feu de route (4), la surface supérieure (4c) du condenseur de feu de route (4) et une surface de sortie de lumière (12) du condenseur de feu de route (4), dans lequel la surface totalement réfléchissante (4b) du condenseur de feu de route (4), la surface supérieure (4c) du condenseur de feu de route (4) et la surface de sortie de lumière (12) du condenseur de feu de route (4) sont reliées dans cet ordre ; la structure de coupelle de condensation de lumière (4a) du condenseur de feu de route (4) est située sur un côté inférieur de la surface totalement réfléchissante (4b) du condenseur de feu de route (4) ; la surface totalement réfléchissante (4b) du condenseur de feu de route (4) est inclinée à un certain angle par rapport au plan horizontal, dans lequel 30° ≤ angle d'inclinaison ≤ 60° ; et la surface de sortie de lumière (12) du condenseur de feu de route (4) est une surface arquée, et la surface de sortie de lumière (12) du condenseur de feu de route (4) est située dans un cercle ayant un diamètre dans une plage de 30 mm ≤ diamètre ≤ 200 mm ; et
la structure de coupelle de condensation de lumière (4a) du condenseur de feu de route (4) comprend une surface réfléchissante de la structure de coupelle de condensation de lumière (4a) du condenseur de feu de route (4), une surface de réfraction interne de la structure de coupelle de condensation de lumière (4a) du condenseur de feu de route (4) et une surface centrale interne de la structure de coupelle de condensation de lumière (4a) du condenseur de feu de route (4),
de préférence, une rainure (41) est ménagée dans une partie inférieure de la structure de coupelle de condensation de lumière (4a) du condenseur de feu de route (4), la surface réfléchissante de la structure de coupelle de condensation de lumière (4a) du condenseur de feu de route (4) est prévue sur une paroi périphérique externe de la structure de coupelle de condensation de lumière (4a) du condenseur de feu de route (4), la surface de réfraction interne de la structure de coupelle de condensation de lumière (4a) du condenseur de feu de route (4) est prévue sur une paroi périphérique de la rainure (41), et la surface centrale interne de la structure de coupelle de condensation de lumière (4a) du condenseur de feu de route (4) est prévue sur une paroi inférieure de la rainure (41),
de préférence, la source lumineuse de feu de route (3a) comprend une DEL, et les sources lumineuses de feux de route (3a) sont prévues en un nombre supérieur ou égal à 2 ; et
le nombre des structures de coupelles de condensation de lumière du condenseur de feu de route (4) est égal au nombre des sources lumineuses de feux de route (3a), et les structures de coupelles de condensation de lumière du condenseur de feu de route (4) sont en correspondance biunivoque avec les sources lumineuses de feux de route (3a) et sont agencées au-dessus des sources lumineuses de feux de route (3a) correspondantes.

7. Module de phare de véhicule selon la revendication 6, dans lequel un film améliorant la réflexion est prévu sur la surface totalement réfléchissante (4b) du condenseur de feu de route (4) et/ou sur la surface supérieure (4c) du condenseur de feu de route (4).

8. Module de phare de véhicule selon l'une quelconque des revendications 6 à 7, dans lequel un film antireflet est prévu sur la surface de sortie de lumière (12) du condenseur de feu de route (4).

9. Module de phare de véhicule selon l'une quelconque des revendications 6 à 8, dans lequel la surface supérieure (4c) du condenseur de feu de route (4) est soumise à un traitement d'aluminisation, avec une réflectivité d'aluminisation supérieure ou égale à 0,8.

10. Module de phare de véhicule selon l'une quelconque des revendications 1 à 9, comprenant en outre un dissipateur thermique (5), un support de lentille (7) et un support de module (8),
dans lequel le support de lentille (7) est configuré de sorte que la lentille (6) est montée sur celui-ci, le support de module (8) est configuré pour relier le dissipateur thermique (5) et le support de lentille (7), et le support de module (8) est configuré pour être relié à un corps de phare du phare de véhicule,
de préférence, une surface incurvée irrégulière (511) ou des surfaces incurvées irrégulières (511) est/sont prévues sur l'un ou les deux côtés d'une ailette de refroidissement (51) du dissipateur thermique (5),
de préférence, le dissipateur thermique (5) est pourvu d'une première surface de montage (52) et d'une seconde surface de montage (53), dans lequel un angle ne dépassant pas 30° est formé entre la première surface de montage (52) et la seconde surface de montage (53) ; la carte de circuit imprimé de feu de croisement (1) est montée sur la première surface de montage (52) ; et la carte de circuit imprimé de feu de route (3) est montée sur la seconde surface de montage (53).

11. Véhicule, **caractérisé en ce qu'**il comprend le module de phare de véhicule selon l'une quelconque des revendications 1 à 10.
